# EUROPÄISCHE PATENTSCHRIFT

(11) **EP 1 449 438 B1**
(45) Veröffentlichungstag und Bekanntmachung des Hinweises auf die Patenterteilung: **21.11.2012**
(21) Anmeldenummer: 04000692.6
(22) Anmeldetag: 15.01.2004
(51) Int. Cl.: A21C 7/00, A21C 5/02

(54) **Teigbearbeitungsanlage**
Dough processing installation
Installation de traitement de pâte

(30) Priorität: 15.02.2003 DE 10306438
(43) Veröffentlichungstag der Anmeldung: 25.08.2004
(73) Patentinhaber: Werner & Pfleiderer Lebensmitteltechnik GmbH, 91550 Dinkelsbühl (DE)
(72) Erfinder: Bodenstorfer, Ferdinand, 1160 Wien (AT)
(74) Vertreter: Hofmann, Matthias

(56) Entgegenhaltungen:
- EP-A2- 0 580 197
- WO-A-90/06683
- AT-B- 389 209
- DE-A1- 1 657 308
- DE-A1- 2 850 936
- DE-A1- 3 526 947
- DE-A1- 19 640 176
- DE-B- 1 045 932
- DE-C- 548 276
- DE-C1- 3 821 045
- GB-A- 274 353

## Beschreibung

Die Erfindung betrifft eine Teigbearbeitungsanlage mit einer Teig-Wirkvorrichtung, bei der eine äußere Wirktrommel relativ zu einer inneren Wirktrommel im Rahmen einer Wirkbewegung bewegt wird.

Eine derartige Teigbearbeitungsanlage ist durch offenkundige Vorbenutzung bekannt. Dort ist eine Relativbewegung zwischen den beiden Wirktrommeln bei der Wirkbewegung fest vorgegeben, so dass die Wirkbewegung auch dann die gleiche bleibt, wenn mit der Teigbearbeitungsanlage unterschiedliche Teigstückgewichte beziehungsweise unterschiedliche Teigstückrezepturen verarbeitet werden. Auch bei verschiedenen Durchmessern von Wirkzellen der Teig-Wirkvorrichtung wird die gleiche Wirkbewegung eingesetzt. Für eine bestimmte Größe der Wirkzellen beziehungsweise für eine bestimmte Teigstückgröße oder Teigrezeptur ergibt diese Wirkbewegung ein gutes Rundwirkergebnis. Abweichungen von der Wirkzellengröße, der Größe der Teigstücke oder der Teigrezeptur führen jedoch zu einer Verschlechterung dieses Ergebnisses.

Aus der GB 274 353 A ist eine Teigbearbeitungsanlage mit den im Oberbegriff des Anspruchs 1 angegebenen Merkmalen bekannt.

Es ist die Aufgabe der vorliegenden Erfindung, eine Teigbearbeitungsanlage der eingangs genannten Art derart weiterzubilden, dass auch bei verschiedenen Teigstück-Größen, Teigrezepturen oder Wirkzellengrößen ein gleichbleibend gutes Rundwirkergebnis erzielt wird.

Diese Aufgabe ist erfindungsgemäß gelöst durch eine Teigbearbeitungsanlage mit den im Anspruch 1 angegebenen Merkmalen.

Der erfindungsgemäße Wirkantrieb mit Antriebskomponenten für verschiedene Bewegungsanteile der Wirkbewegung führt zur Möglichkeit der einfachen Beeinflussung der Wirkbewegung über die Antriebswelle sowie das Wirkantriebsgetriebe. Die Art der Relativbewegung zwischen den beiden Wirktrommeln kann damit auf einfache Weise an die Größe der Wirkzellen, an die Größe der Teigstücke oder an die Teigrezeptur angepasst werden. Durch Abstimmung der verschiedenen Antriebskomponenten ist zum Beispiel eine kreisförmige Relativbewegung der Wirktrommeln am Ort der Wirkzellen und ein entsprechend effizientes Wirken möglich. Auch andere Bewegungsmodi können durch Variation der verschiedenen Bewegungsanteile der Wirkbewegung vorgegeben werden.

Durch eine Verstelleinrichtung nach Anspruch 2 lässt sich zum Beispiel der Radius der oben angesprochenen kreisförmigen Bewegung anpassen. Hierdurch lassen sich insbesondere Änderungen in den Anforderungen, die an das Wirken gestellt werden, ausgleichen, die durch eine Änderung der Wirkzellengröße hervorgerufen wurden.

Eine Exzenterwelle nach Anspruch 3 bietet eine einfache Möglichkeit zur Bereitstellung einer Bewegungskomponente parallel zur Längsachse der Wirktrommeln.

Eine Verstelleinrichtung nach Anspruch 4 ist einfach realisierbar.

Eine Verstelleinrichtung nach Anspruch 5 lässt sich kompakt im beziehungsweise beim Wirkantriebsgetriebe unterbringen.

Eine Verstelleinrichtung nach Anspruch 6 bietet die Möglichkeit, eine automatische Verstellung der Relativbewegung bei der Wirkbewegung abhängig vom Drehsinn der Getriebewelle bereitzustellen.

Eine Verstelleinheit nach Anspruch 7 nutzt den von den Exzenterwellen bereitgestellten Exzenterhub optimal aus.

Ein Ausführungsbeispiel der Erfindung wird nachfolgend anhand der Zeichnung näher erläutert. In dieser zeigen:
- Fig. 1: einen Schnitt durch eine Teigbearbeitungsanlage als Momentaufnahme in einer Teig-Ansaug-Phase,
- Fig. 2 und 3: Momentaufnahmen der Teigbearbeitungsanlage in einer Teig-Füll-Phase und in einer Teig-Ausstoß-Phase in einer zu Fig. 1 ähnlichen Darstellung, wobei dort eine Teig-Wirk-Vorrichtung sowie eine Teig-Abführ-Einrichtung sowie einige weitere Details der Teigbearbeitungsanlage gemäß Fig. 1 nicht dargestellt sind,
- Fig. 4: einen Längsschnitt durch die Teig-Wirk-Vorrichtung der Teigbearbeitungsanlage bei maximalem Abstand zwischen der Achse einer ersten Exenterwelle und einer Getriebewelle eines Wirkantriebsgetriebes,
- Fig. 5: eine erste Seitenansicht eines Wirkantriebsgetriebes der Teig-Wirk-Vorrichtung mit Blickrichtung auf die in Fig. 4 untenliegende Seite des Wirkantriebsgetriebes,
- Fig. 6: eine weitere Seitenansicht des Wirkantriebsgetriebes mit Blick auf eine in Fig. 4 obenliegende Seite des Wirkantriebgetriebes,
- Fig. 7: eine zur Fig. 4 ähnliche Darstellung der Teig-Wirk-Vorrichtung bei minimalem Abstand zwischen der Achse der ersten Exenterwelle und der Getriebewelle des Wirkantriebsgetriebes, und
- Fig. 8 und 9: zu den Fig. 5 und 6 ähnliche Ansichten der Teig-Wirk-Vorrichtung in der Stellung der Fig. 7.

Eine Teigbearbeitungsanlage 1 dient zum Portionieren und zum Wirken von Teig, zum Beispiel bei der Brötchenherstellung. Hierzu ist Teig in einen Zuführtrichter 2 eingefüllt. Eine bodenseitige Ausgangsöffnung 3 des Zuführtrichters 2 steht mit einem Förderraum 4 in Verbindung, in dem ein Förderkolben 5 horizontal läuft.
Die horizontale Förderbewegung des Förderkolbens 5 wird durch einen Kurbeltrieb 6 angetrieben. Hierzu ist an einem dem Förderraum 4 abgewandten Ende des Förderkolbens 5 ein erster Hebelarm 7 angelenkt, der an seinem anderen Ende drehfest mit einer Schwenkwelle 8 verbunden ist. Ebenfalls drehfest mit der Schwenkwelle 8 verbunden ist ein zweiter Hebelarm 9, der an seinem anderen Ende an einem ersten Pleuelstangenabschnitt 10 einer Pleuelstange 11 angelenkt ist. Über ein Verbindungsglied 12, in dem eine Kraftmessdose 13 angeordnet ist, ist der erste Pleuelstangenabschnitt 10 an einem zweiten Pleuelstangenabschnitt 14 angelenkt. Die Anordnung der Kraftmessdose 13 im Verbindungsglied 12 ist derart, dass mittels der Kraftmessdose 13 der Druck gemessen werden kann, den die beiden Pleuelstangenabschnitte 10, 14 bei der Förderbewegung des Förderkolbens 5 aufeinander ausüben. Über eine Signalleitung 15 steht die Kraftmessdose 13 mit einer Steuereinrichtung 16 in Verbindung. Die Steuereinrichtung 16 weist einen wiederbeschreibbaren Speicher 16a auf.

Kraftmessdosen nach Art der Kraftmessdose 13 sind bekannt. Die Formänderung der Kraftmessdose 13 ist ein Maß für den auf diese einwirkenden Druck. Diese Formänderung kann kapazitiv, induktiv oder auch durch die Messung einer elektrischen Widerstandsänderung, zum Beispiel von Dehnungsmessstreifen, gemessen werden.

Die beiden Pleuelstangenabschnitte 10, 14 sowie das Verbindungsglied 12 mit der Kraftmessdose 13 sind in einem Pleuelstangengehäuse 17 geführt. Das vom Verbindungsglied 12 abgewandte Ende des zweiten Pleuelstangenabschnitts 14 ist an einer Kurbelwelle 18 angelenkt, die über eine Antriebskette 19 von einer Antriebswelle 20 eines Förderkolben-Antriebsmotors 21 angetrieben ist. Mit letzterem ist über eine Steuerleitung 22 die Steuereinrichtung 16 verbunden.

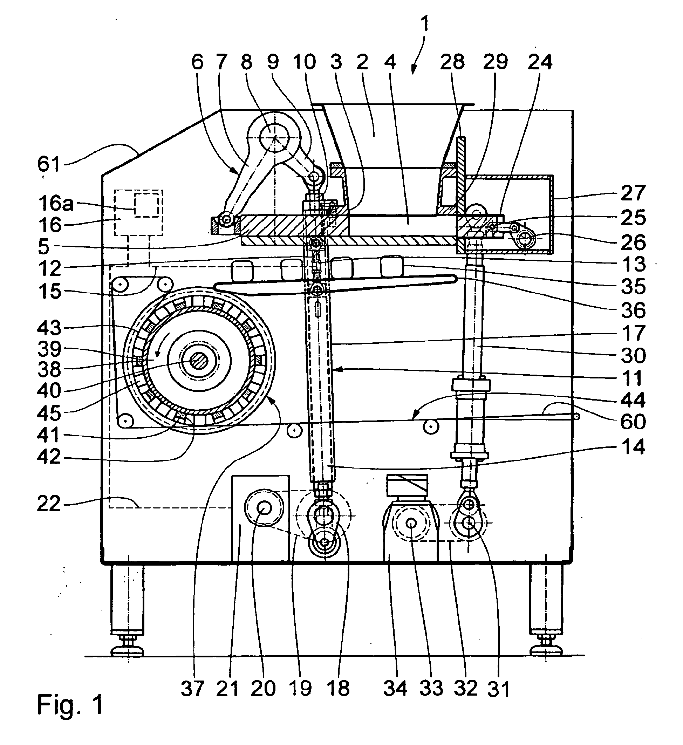

Im Förderraum 4 wird der Teig durch den in den Fig. 1 bis 3 nach rechts bewegten Förderkolben 5 gegen Portionierkammern 23 gedrückt, deren Mantelwände von Portionierzylindern 24 gebildet werden. Die Portionierkammem 23 setzen in den Fig. 1 bis 3 den Förderraum 4 nach rechts fort. Auf der vom Förderkolben 5 abgewandten Seite werden die Portionierkammem 23 durch Portionierkolben 25 begrenzt. Bei der Teigverarbeitungsanlage 1 sind senkrecht zur Zeichenebene der Fig. 1 bis 3 mehrere Portioniereinheiten mit jeweils einer Portionierkammer 23, einem Portionierzylinder 24 und einem Portionierkolben 25 hintereinander angeordnet. Zur Beschreibung der Teigbearbeitungsanlage reicht es aus, wenn nachfolgend eine einzelne derartige Portioniereinheit beschrieben wird, da die anderen Portioniereinheiten ebenso aufgebaut sind. Der Portionierkolben 25 ist an seinem vom Förderraum 4 abgewandten Ende an einer Portionier-Kurbelwelle 26 angeordnet, die in in den Fig. 1 bis 3 in nicht dargestellter Weise angetrieben ist. Über den Schwenkwinkel der Portionier-Kurbelwelle 26 ist ein Portionierhub der Portionierkolben 25 einstellbar, wodurch ein gewünschtes Volumen portionierter Teigstücke erreicht werden kann.

Die Portioniereinheiten sind in einem Flachschieberkasten 27 angeordnet, dessen vertikale Schieberwand 28 bündig an Stirnwandabschnitten eines den Förderraum 4 begrenzenden und den Förderkolben 5 führenden Tragabschnitts 29 der Teigbearbeitungsanlage 1 anliegt. Der Flachschieberkasten 27 ist längs der vertikalen Führung der Schieberwand 28 am Tragabschnitt 29 zur Portionierung des Teigs verschiebbar. Hierzu ist der Flachschieberkasten 27 an einer Flachschieberkasten-Pleuelstange 30 angelenkt, die an ihrem anderen Ende an einer Flachschieberkasten-Kurbelwelle 31 angelenkt ist. Letztere wird über eine Antriebskette 32 von einer Antriebswelle 33 eines Flachschieberkasten-Antriebsmotors 34 angetrieben.

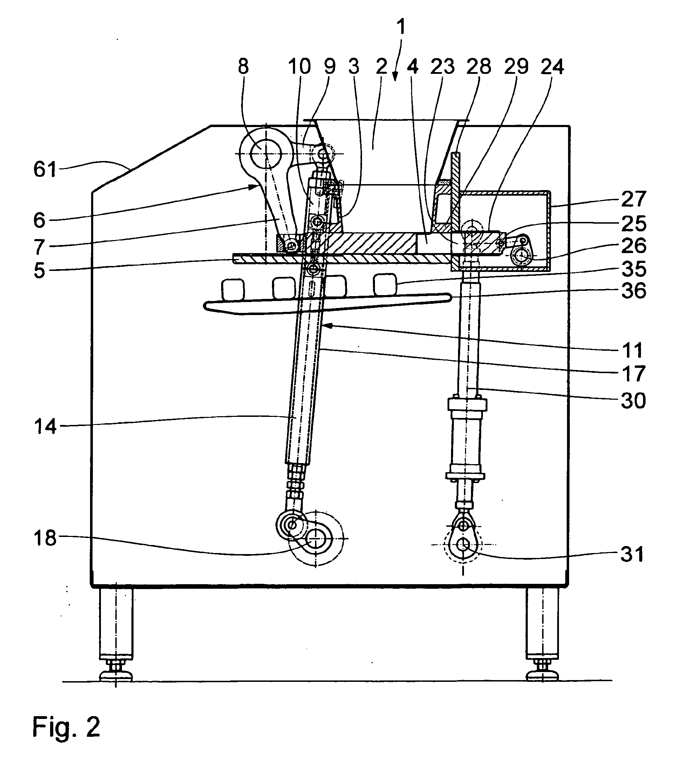

Fig. 1 bis 3 verdeutlichen das Portionieren von Teigstücken 35 mit der Teigbearbeitungsanlage 1. Fig. 1 zeigt dabei die Teigbearbeitungsanlage 1 in einer Teig-Ansaug-Phase, in der der Förderkolben 5 vollständig nach links zurückgezogen ist und in der die Portionierkolben 25 eine nach links verlagerte Stellung einnehmen, in welche ihre Kolbenwände bündig mit der dem Förderraum 4 zugewandten Fläche der Schieberwand 28 abschließen. Fig. 2 zeigt die Teigbearbeitungsanlage 1 während einer Teig-Füll-Phase, in welcher der angesaugte Teig durch Bewegen des Förderkolbens 5 nach rechts verdichtet und in Richtung der Portionierkammern 23 gedrückt wird. Hierbei werden die Portionierkolben 25 in den Portionierzylindern 24 um den über die Portionier-Kurbelwelle 26 vorgegebenen Portionierhub nach rechts verlagert, so dass in den Portionierkammern 23 ein gewünschtes Teigvolumen sich sammeln kann.

Der Druck, mit dem der Förderkolben 5 in der Teig-Füll-Phase auf den verdichteten Teig im Förderraum 4 und in den Portionierkammern 23 drückt, wird mittels der Kraftmessdose 13 gemessen und über die Signalleitung 15 an die Steuereinrichtung 16 übermittelt. Dort wird der gemessene Druck mit einem im Speicher 16a der Steuereinrichtung 16 abgelegten Grenzwert verglichen. Wenn der mit der Kraftmessdose 13 gemessene Druck den Druck-Grenzwert erreicht hat, ist das Eindrücken des Teigs in die Portionierkammern 23 durch den Förderkolben 5 abgeschlossen und dieser wird, zum Beispiel in der Stellung der Fig. 2, gesteuert von der Steuereinrichtung 16 über die Steuerleitung 22, angehalten. Der in der Steuereinrichtung 16 abgelegte Druck-Grenzwert ist insbesondere an die Teigrezeptur und auch an die Portionsgröße angepasst. Es ist klar, dass der Druck, den der Förderkolben 5 während der Teig-Füll-Phase auf den Teig ausübt, im Prinzip an jedem Kraftübertragungselement zwischen dem Förderkolben-Antriebsmotor 21 und dem Förderkolben 5 gemessen werden kann. Je nach in der Teigbearbeitungsanlage 1 bearbeiteter Teigrezeptur kann ein Druck-Grenzwert aus einer Mehrzahl von im Speicher 16a abgelegten Druck-Grenzwerten vom Benutzer ausgewählt werden.

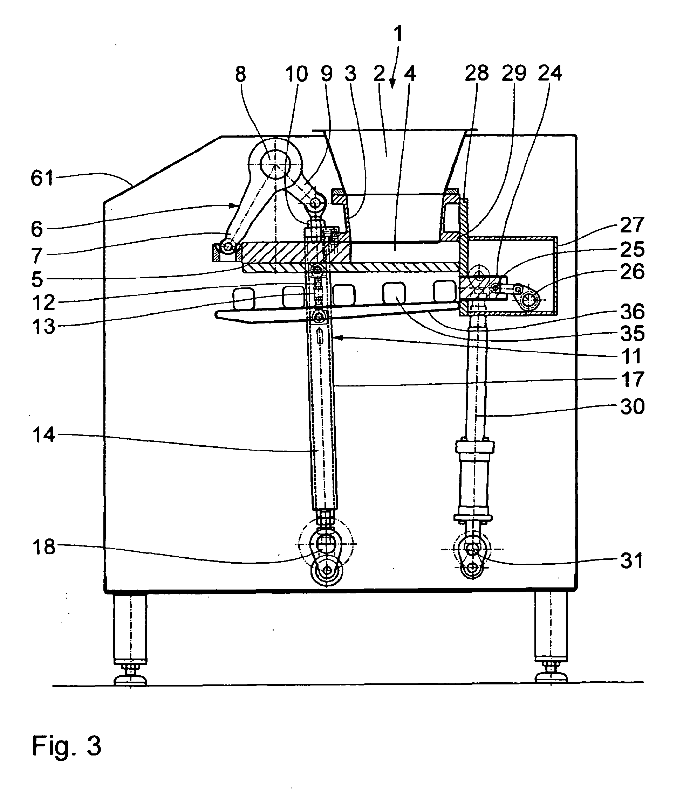

Nach der Teig-Füll-Phase wird der Flachschieberkasten 27 nach unten in die Stellung gemäß Fig. 3 verbracht, welche die Teigbearbeitungsanlage 1 in einer Teig-Ausstoß-Phase zeigt. Die Portionierkolben 25 werden nach Verlagerung des Flachschieberkastens 27 wieder in die in Fig. 3 dargestellte nach links verlagerte Stellung verbracht und stoßen somit Teigstücke 35 auf ein Übergabe-Transportband 36, welches als in nicht dargestellter Weise umgelenktes Endlos-Förderband ausgeführt ist, aus. Nach Durchlaufen der drei in den Fig. 1 bis 3 dargestellten Phasen liegt also auf dem Übergabe-Transportband 36 senkrecht zur Zeichenebene der Fig. 1 bis 3 eine Reihe von Teigstücken 35 vor, deren Anzahl der Anzahl der Portioniereinheiten entspricht. Diese Reihe von Teigstücken 35 wird dann auf dem Übergabe-Transportband 36 nach links in Richtung auf eine Teig-Wirkvorrichtung 37 zu transportiert.

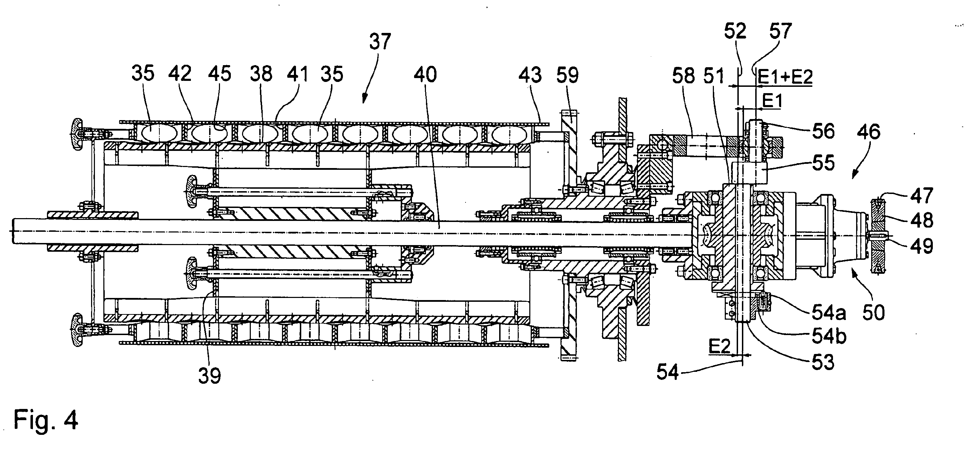

Die Teig-Wirkvorrichtung 37 wird nachfolgend unter zusätzlicher Bezugnahme auf die Fig. 4 bis 9 beschrieben. Sie weist eine innere hohlzylindrische Wirktrommel 38 auf, die über ein Traggestell 39 drehfest mit einer zentralen Wirktrommelwelle 40 verbunden ist. Koaxial um die innere Wirktrommel 38 ist eine auch als Kammertrommel bezeichnete äußere hohlzylindrische Wirktrommel 41 angeordnet. Diese ist um die Wirktrommelwelle 40 relativ zur inneren Wirktrommel 38 drehbar an der Wirktrommelwelle 40 gelagert angeordnet. Die äußere Wirktrommel 41 weist in bekannter Weise Durchbrechungen 42 auf. Diese sind nach außen und nach innen offen und werden nach innen begrenzt durch die Außenwand der inneren Wirktrommel 38. In einem Umfangsabschnitt der äußeren Wirktrommel 41 werden die Durchbrechungen 42 nach außen begrenzt durch ein Wirktrum 43 eines Wirk/Förderbandes 44, welches in diesem Umfangsabschnitt an der äußeren Wirktrommel 41 anliegt. Die in diesem Umfangsabschnitt allseitig begrenzten Durchbrechungen 42 bilden Wirkzellen 45. Das Wirk/Förderband 44 ist als mehrfach umgelenktes Endlos-Förderband ausgeführt.

Die innere Wirktrommel 38 und die äußere Wirktrommel 41 führen zum Wirken des Teigs relativ zueinander eine Wirkbewegung durch, die von einem insgesamt mit dem Bezugszeichen 46 bezeichneten Wirkantrieb angetrieben ist. Hierzu wirkt ein nicht dargestellter Wirk-Antriebsmotor über einen Transmissionsriemen 47 auf eine Transmissionsscheibe 48, die drehfest mit einer ersten Übertragungswelle 49 verbunden ist. Letztere ist mit einer antriebsseitigen Welle eines Wirkantriebsgetriebes 50 verbunden.

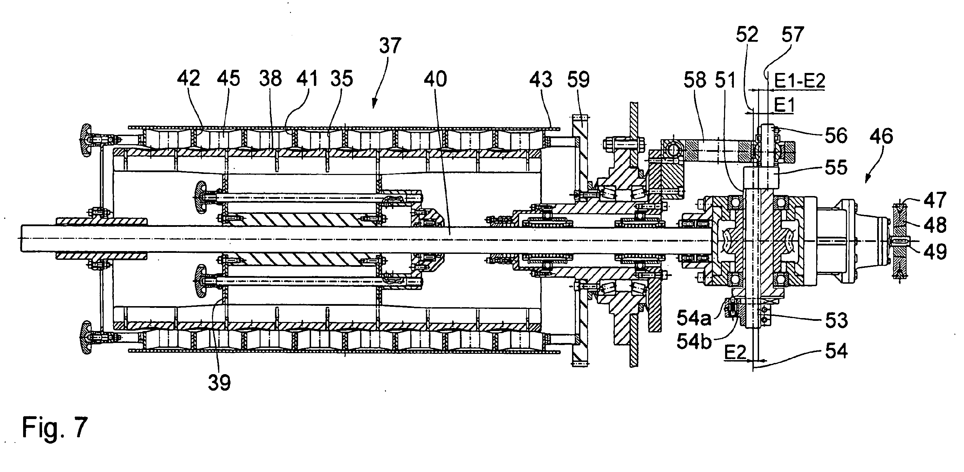

Dieses überträgt die Drehung der Übertragungswelle 49 zunächst in eine Drehung der hiermit fluchtenden Wirktrommelwelle 40, die somit eine erste Antriebskomponente darstellt, welche die innere Wirktrommel 3 8 um ihre Längsachse in Rotation versetzt. Ferner überträgt das Wirkantriebsgetriebe 50 die Drehung der Übertragungswelle 49 in eine Drehung einer Getriebewelle 51, die zwischen der Übertragungswelle 49 und der Wirktrommel-Welle 40 angeordnet ist und deren Rotationsachse 52 senkrecht zur Rotationsachse der Wirktrommelwelle 40 verläuft. In einer Bohrung der Getriebewelle 51 läuft eine Exzenterwelle 53, deren Rotationsachse 54 parallel zur Rotationsachse der Getriebewelle 51 verläuft und zu dieser einen Abstand hat, der in den Fig. 4 und 7 mit E₂ bezeichnet ist.

Die Exzenterwelle 53 ist relativ zur Getriebewelle 51 um ihre Rotationsachse 54 schwenkbar. Dieser Verschwenkweg wird begrenzt durch einen Anschlagskörper 54a, der drehfest mit der Exzenterwelle 53 verbunden ist und mit einem Gegenanschlagskörper 54b zusammenarbeitet, der als Stufe in einer dem Anschlagskörper 54a zugewandten Stirnwand der Getriebewelle 51 ausgeführt ist. Ein weiterer Gegenanschlagskörper 54c ist ebenfalls in der Stirnwand der Getriebewelle 51 ausgeführt. Die Exzenterwelle 53 steht über ein Exzenter-Verbindungsglied 55 mit einer weiteren Exzenterwelle 56 in Verbindung, deren Rotationsachse 57 parallel zu den Rotationsachsen 52 und 54 angeordnet ist. Der Abstand zwischen den Rotationsachsen 54, 57 der Exzenterwellen 53, 56 ist in Fig. 4 mit E₁ bezeichnet. Die Exzenterwelle 56 ist in Bezug auf die Getriebewelle 51 in der Stellung des Wirkantriebs 46 in den Fig. 4 bis 6 derart angeordnet, dass die Rotationsachse 52 der Getriebewelle 51 zur Rotationsachse 57 der Exzenterwelle 56 den Abstand E₁ + E₂ hat.

Die Exzenterwelle 56 ist über ein Kugelgelenk mit einem Übertragungsglied 58 verbunden. Letzteres steht über ein weiteres Übertragungsglied 59, welches drehbar um die Wirktrommelwelle 40 gelagert ist, mit der äußeren Wirktrommel 41 in Verbindung.

Die beiden Übertragungsglieder 58, 59 stellen eine zweite und eine dritte Antriebskomponente des Wirkantriebs 46 dar und haben folgende Funktion: Zum einen wird über die Übertragungsglieder 58, 59 die Drehbewegung der Übertragungswelle 59 in eine Drehbewegung der äußeren Wirktrommel 41 um die Wirktrommelwelle 40 übertragen. Die Drehbewegungen der beiden Wirktrommeln 38, 41 um die Wirktrommelwelle 40 sind dabei voneinander unabhängig. In diesem Sinne stellen die Übertragungsglieder 58, 59 eine zweite Antriebskomponente des Wirkantriebs 46 dar. Ferner übermitteln die Übertragungsglieder 58, 59 auch eine Bewegungskomponente der äußeren Wirktrommel 41 relativ zur inneren Wirktrommel 38 parallel zur Wirktrommelwelle 40, angetrieben durch die Drehung der Exzenterwelle 56 um die Getriebewelle 51. In diesem Sinne stellen die Übertragungsglieder 58, 59 eine dritte Antriebskomponente des Wirkantriebs 46 dar. Die Rotation der äußeren Wirktrommel 41 um die innere Wirktrommel 38 und die Bewegung der äußeren Wirktrommel 41 relativ zur inneren Wirktrommel 38 mit Bewegungskomponente parallel zur Längsachse der Wirktrommelwelle 40 sind so aufeinander abgestimmt, dass die Durchbrechungen 42 und insbesondere die Wirkzellen eine kreisförmige Bewegung relativ zur die Durchbrechungen 42 begrenzenden Wand der inneren Wirktrommel 38 und relativ zum Wirktrum 43 des Wirk-Förderbandes 44 vollführen. Die in den Wirkzellen befindlichen Teigstücke 35 werden auf diese Weise gewirkt, wodurch das vorher ungeformte Teigstück 35 in eine kugelige Form gebracht wird.

Ein relatives Verschwenken der beiden Exzenterwellen 53, 56 zueinander um 180° ist möglich. Eine zweite Relativstellung der beiden Exzenterwellen 53, 56 zueinander, bei der der Anschlagskörper 54a am Gegenanschlagskörper 54c anliegt, ist in Fig. 7 dargestellt. Dort subtrahieren sich die Abstände E₁ und E₂ voneinander, so dass die Rotationsachse 52 der Getriebewelle 51 und die Rotationsachse 57 der Exzenterwelle 56 zueinander einen Abstand von E₁ - E₂ aufweisen. Durch Verschwenken der Exzenterwellen 53, 56 zueinander zwischen den Stellungen der Fig. 4 und 7 wird demnach die Exzentrizität der Exzenterwelle 57 zur Getriebewelle 51 von der größerem Exzentrizität E₁ + E₂ auf die kleinere Exzentrizität E₁ - E₂ vermindert. Entsprechend verringert sich der Betrag der Bewegungskomponente der Relativbewegung der äußeren Wirktrommel 41 zur inneren Wirktrommel 38 parallel zur Längsachse der Wirktrommelwelle 40. Durch entsprechende Anpassung der Rotationsgeschwindigkeiten der inneren Wirktrommel 3 8 einerseits und der äußeren Wirktrommel 41 andererseits lässt sich auf diese Weise eine entsprechende Verkleinerung der kreisförmigen Wirkbewegung der äußeren Wirktrommel 41 zu inneren Wirktrommel 38 erzielen.

### Die Teig-Wirkvorrichtung 37 funktioniert folgendermaßen:

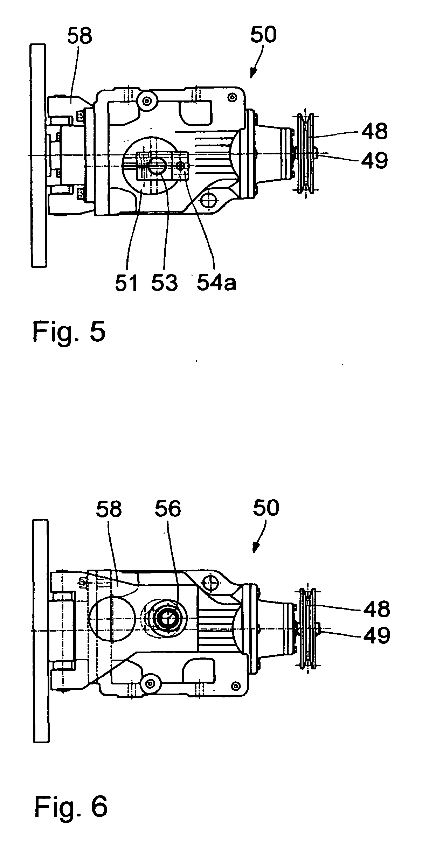

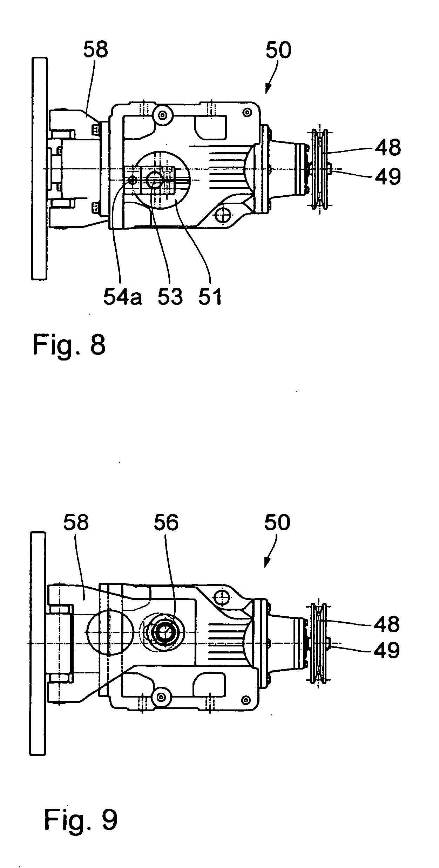

Je nach dem Gewicht der Teigstücke 35 beziehungsweise deren Teigrezeptur wird der Drehsinn der Übertragungswelle 49 und der Unterschied in den Rotationsgeschwindigkeiten zwischen der inneren Wirktrommel 38 einerseits und der äußeren Wirktrommel 41 andererseits vorgegeben. Bei einem Antrieb der Getriebewelle 51 in Fig. 5 im Uhrzeigersinn wird spätestens nach einer halben Umdrehung die Stellung des Wirkantriebs 46 gemäß Fig. 4 erreicht. In dieser Stellung kann eine kreisförmige Wirkbewegung mit größerem Radius bereitgestellt werden. Soll eine Wirkbewegung mit kleinerem Radius bereitgestellt werden, so wird der Drehsinn der Drehung der Übertragungswelle 49 umgekehrt. In diesem Fall dreht sich auch die Getriebewelle 51 im umgekehrten Drehsinn, das heißt, in Fig. 8 entgegen dem Uhrzeigersinn. Der Wirkantrieb 46 nimmt dann spätestens nach einer halben Umdrehung die Position gemäß der Fig. 7 ein, bei der die kreisförmige Wirkbewegung mit kleinerem Radius bereitgestellt ist.

Nach erfolgtem Wirken verlassen die Teigstücke 35 die Wirkzellen und werden auf ein Fördertrum 60 des Wirk/Förderbandes 44 übergeben und verlassen ein Gehäuse 61 der Teigbearbeitungsanlage 1 durch eine entsprechende Ausgabeöffnung.

## Patentansprüche

1. Teigbearbeitungsanlage (1)
- mit einer Teig-Zuführeinrichtung (2),
- mit einer Teig-Portioniervorrichtung (5, 23 bis 27),
- mit einer Teig-Wirkvorrichtung (37), die umfasst
-- eine innere Wirktrommel (38),
-- eine relativ zu dieser im Rahmen einer Wirkbewegung bewegte und koaxial zu dieser angeordnete äußere Wirktrommel (41) und
-- eine Mehrzahl von Wirkzellen (45), die durch die Wirktrommeln (38, 41) zumindest teilweise begrenzt werden,
-- wobei die Wirkbewegung der Teig-Wirkvorrichtung (37) mittels eines Wirkantriebs (46) angetrieben ist,
- mit einer Übergabeeinrichtung (36), die eine Teigportion (35) von der Teig-Portioniervorrichtung (5, 23 bis 27) an die Teig-Wirkvorrichtung (37) übergibt, und
- mit einer Teig-Abführeinrichtung (60),
wobei der Wirkantrieb (46) umfasst:
- eine erste Antriebskomponente (40), welche die innere Wirktrommel (38) um ihre Längsachse in Rotation versetzt,
- eine zweite Antriebskomponente (58, 59), welche die äußere Wirktrommel (41) um ihre Längsachse in Rotation versetzt,
**gekennzeichnet durch**
- eine dritte Antriebskomponente (58, 59), welche eine Bewegung der äußeren Wirktrommel (41) relativ zur inneren Wirktrommel (38) mit einer Bewegungskomponente parallel zur Längsachse der Wirktrommeln (38, 41) periodisch antreibt,
- wobei ein Wirkantriebsgetriebe (50) vorgesehen ist, welches die Bewegungen der dritten Antriebskomponente (58, 59) abgeleitet von der Bewegung einer zumindest eine der beiden anderen Antriebskomponenten (40, 58, 59) antreibenden Antriebswelle (49) antreibt.

2. Teigbearbeitungsanlage nach Anspruch 1, **gekennzeichnet durch** eine Verstelleinrichtung (53, 54a bis 54c) zur Einstellung des Bewegungshubs der Bewegungskomponente der Relativbewegung zwischen den Wirktrommeln (38, 41) parallel zu deren Längsachse.

3. Teigbearbeitungsanlage nach Anspruch 1 oder 2, **dadurch gekennzeichnet, dass** das Wirkantriebsgetriebe (50) zumindest eine erste Exzenterwelle (56) aufweist, welche abtriebsseitig der dritten Antriebskomponente (58, 59) zugeordnet ist.

4. Teigbearbeitungsanlage nach Anspruch 3, **dadurch gekennzeichnet, dass** die Verstelleinrichtung (53, 54a bis 54c) derart ausgeführt ist, dass durch sie der Exzenterhub der ersten Exzenterwelle (56) eingestellt wird.

5. Teigbearbeitungsanlage nach Anspruch 4, **dadurch gekennzeichnet, dass** die Verstelleinrichtung (53, 54a bis 54c) umfasst:
- eine mit der ersten Exzenterwelle (56) gekoppelte zweite Exzenterwelle (53), deren Rotationsachse (54) parallel zur Rotationsachse (57) der ersten Exzenterwelle (56) und von dieser beabstandet angeordnet ist,
- eine Verstelleinheit (54a bis 54c) zur Einstellung des Abstandes der ersten Exzenterwelle (56) zur Längsachse (52) einer Getriebewelle (51) des Wirkantriebsgetriebes (50), welche über die erste Exzenterwelle (56) mit der dritten Antriebskomponente (58, 59) verbunden ist, durch Verschwenken der Getriebewelle (51) um die zweite Exzenterwelle (53).

6. Teigbearbeitungsanlage nach Anspruch 5, **dadurch gekennzeichnet, dass** die Verstelleinrichtung (53, 54a bis 54c) umfasst:
- einen mit der zweiten Exzenterwelle (53) verbundenen Anschlagskörper (54a),
- der mit zwei Gegenanschlagskörpern (54 b, 54c) zusammenarbeitet, wobei
- der Anschlagskörper (54a) je nach Drehsinn der Getriebewelle (51) mit einem der beiden Gegenanschlagskörper (54b, 54c) in Anlage kommt und
-- bei Anlage des Anschlagskörpers (54a) am ersten Gegenanschlagskörper (54b) ein erster Abstand (E₁ + E₂) zwischen der ersten Exzenterwelle (56) und der Längsachse (52) der Getriebewelle (51) und
-- bei Anlage des Anschlagskörpers (54a) am zweiten Gegenanschlagskörper (54c) ein zweiter, vom ersten Abstand (E₁ + E₂) verschiedener Abstand (E₁ - E₂) zwischen der ersten Exzenterwelle (56) und der Längsachse (52) der Getriebewelle (51) vorliegt.

7. Teigbearbeitungsanlage nach Anspruch 6, **dadurch gekennzeichnet, dass** bei Anlage des Anschlagskörpers (54a) am ersten Gegenanschlagskörper (54b) ein maximaler Abstand (E₁ + E₂) zwischen der ersten Exzenterwelle (56) und der Längsachse (52) der Getriebewelle (51) und bei Anlage des Anschlagskörpers (54a) am zweiten Gegenanschlagskörper (54c) ein zweiter, minimaler Abstand (E₁ - E₂) zwischen der ersten Exzenterwelle (56) und der Längsachse (52) der Getriebewelle (51) vorliegt.

## Claims

1. A dough treatment facility (1), comprising
- a dough feeder (2);
- a dough metering arrangement (5, 23 to 27);
- a dough kneading arrangement (27), which comprises
-- an inner kneading drum (3 8)
-- an outer kneading drum (41), which is disposed coaxially thereof and moved in relation thereto within the scope of a kneading motion, and
-- a plurality of kneading compartments (45), which are at least partially defined by the kneading drums (3 8, 41),
-- with the kneading motion of the dough kneading arrangement (37) being actuated by a kneading drive (46);
- a transfer arrangement (36), which transfers a metered dough piece (35) from the dough metering arrangement (5, 23 to 27) to the dough kneading arrangement (37); and
- a dough discharge arrangement (60);
wherein the kneading drive (46) comprises:
- a first drive component (40), which sets the inner kneading drum (3 8) rotating about its longitudinal axis;
- a second drive component (58, 59), which sets the outer kneading drum (41) rotating about its longitudinal axis;
**characterized by**
- a third drive component (58, 59), which periodically actuates a motion of the outer kneading drum (41) relative to the inner kneading drum (38),this motion having a motional component parallel to the longitudinal axis of the kneading drums (38, 41);
- with a kneading drive gear (50) being provided, which actuates the motions of the third drive component (58, 59), derived from the motion of a drive shaft (49) that actuates at least one of the two other drive components (40, 58, 59).

2. A dough treatment facility according to claim 1, **characterized by** an adjusting device (53, 54a to 54c) for adjustment of the motional stroke of the motional component of the motion of the kneading drums (38, 41) relative to each other and parallel to their longitudinal axis.

3. A dough treatment facility according to claim 1 or 2, **characterized in that** the kneading drive gear (50) comprises at least one first eccentric shaft (56) which, at the driven end, is allocated to the third drive component (58, 59).

4. A dough treatment facility according to claim 3, **characterized in that** the adjusting device (53, 54a to 54c) is designed for adjusting the eccentric stroke of the first eccentric shaft (56).

5. A dough treatment facility according to claim 4, **characterized in that** the adjusting device (53, 54a to 54c) comprises:
- a second eccentric shaft (53), which is coupled with the first eccentric shaft (56) and the axis of rotation (54) of which is parallel to, and spaced from, the axis of rotation (57) of the first eccentric shaft (56);
- an adjusting unit (54a to 54c) for adjustment of the distance of the first eccentric shaft (56) from the longitudinal axis (52) of a gear shaft (51) of the kneading drive gear (50) by the gear shaft (51) being pivoted about the second eccentric shaft (53), with the gear shaft (51) being connected, via the first eccentric shaft (56), to the third drive component (58, 59).

6. A dough treatment facility according to claim 5, **characterized in that** the adjusting device (53, 54a to 54c) comprises:
- a stop (54a) which is connected to the second eccentric shaft (53);
- the stop (54a) cooperating with two counterpart stops (54b, 54c);
- the stop (54a) bearing against one of the two counterpart stops (54b, 54c), depending on the sense of rotation of the gear shaft (51),
-- with a first distance (E₁ + E₂) being provided between the first eccentric shaft (56) and the longitudinal axis (52) of the gear shaft (51) when the stop (54a) bears against the first counterpart stop (54b), and
-- with a second distance (E₁ - E₂), which differs from the first distance (E₁ + E₂), being provided between the first eccentric shaft (56) and the longitudinal axis (52) of the gear shaft (51) when the stop (54a) bears against the second counterpart stop (54c).

7. A dough treatment facility according to claim 6, **characterized in that** a maximal distance (E₁ + E₂) is provided between the first eccentric shaft (56) and the longitudinal axis (52) of the gear shaft (51) when the stop (54a) bears against the first counterpart stop (54b); and a second minimal distance (E₁- E₂) is provided between the first eccentric shaft (56) and the longitudinal axis (52) of the gear shaft (51) when the stop (54a) bears against the second counterpart stop (54c).

## Revendications

1. Installation de traitement de pâte (1)
- comprenant un système d'amenée de la pâte (2),
- comprenant un dispositif de fractionnement de la pâte (5, 23 à 27),
- comprenant un dispositif de fermentation de la pâte (37) qui comporte
-- un tambour de fermentation interne (38),
-- un tambour de fermentation externe (41), disposé de manière coaxiale par rapport à celui-ci et activé par celui-ci en corrélation avec un mouvement dû à la fermentation
et
-- une multitude de cellules de fermentation (45) qui sont au moins partiellement limitées par les tambours de fermentation (38, 41),
-- le mouvement dû à la fermentation du dispositif de fermentation de la pâte (37) étant activé au moyen d'un entraînement de fermentation (46),
- comprenant un système de transmission (36) qui transfère une portion de pâte (35) du dispositif de fractionnement de la pâte (5, 23 à 27) vers le dispositif de fermentation de la pâte (37), et
- comprenant un système de dégagement de la pâte (6)),
l'entraînement de la fermentation (46) comprenant :
- une première composante d'entraînement (40) qui met le tambour de fermentation interne en rotation autour de son axe longitudinal,
- une seconde composante d'entraînement (58, 59) qui met le tambour de fermentation externe en rotation autour de son axe longitudinal,
**caractérisée par**
- une troisième composante d'entraînement (58, 59) qu'un mouvement du tambour de fermentation externe (41) par rapport au tambour interne (38) met périodiquement en route avec une composante de mouvement parallèle à l'axe longitudinal des tambours de fermentation (38, 41),
- un engrenage d'entraînement de fermentation (50) étant prévu, qui entraîne l'arbre d'entraînement (49) activant les mouvements de la troisième composante d'activation (58, 59), déviés par le mouvement d'au moins l'une des deux autres composantes d'entraînement (40, 58, 59).

2. Installation de traitement de pâte selon la revendication 1 **caractérisée par** un système de réglage (53, 54a à 54c) pour le réglage de la course du mouvement des composantes de mouvement du mouvement relatif entre les tambours de fermentation (38, 41) parallèlement à leurs axes longitudinaux.

3. Installation de traitement de pâte selon les revendications 1 ou 2 **caractérisée en ce que** l'engrenage d'entraînement de fermentation (50) présente au moins un premier arbre d'excentrique (56) qui est disposé du côté de la sortie de la troisième composantes d'entraînement (58, 59).

4. Installation de traitement de pâte selon la revendication 3 **caractérisée en ce que** le système de réglage (53, 54a à 54c) est conçu de telle sorte qu'il est réglé par l'intermédiaire de la course de l'excentrique du premier arbre d'excentrique (56).

5. Installation de traitement de pâte selon la revendication 4 **caractérisée en ce que** le dispositif de réglage (53, 54a à 54c) comprend :
-un second arbre d'excentrique (53) couplé avec le premier arbre d'excentrique (56), second arbre d'excentrique dont l'axe de rotation (54) est disposé parallèlement à l'axe de rotation (57) du premier arbre d'excentrique (56) et espacé par rapport à celui-ci,
- un système de réglage (54a à 54c) pour le réglage de l'espace entre le premier arbre d'excentrique (56) et l'axe longitudinal (52) d'un arbre d'engrenage (51) de l'engrenage de l'entraînement de fermentation (50), qui est relié par l'intermédiaire du premier arbre d'excentrique (56) avec la troisième composante de l'entraînement (58, 59), par un pivotement de l'arbre d'engrenage autour du second arbre d'excentrique (53).

6. Installation de traitement de pâte selon la revendication 5 **caractérisée en ce que** le système de réglage (53, 54a à 54c) comprend :
- un corps de butée (54a) relié avec le second arbre d'excentrique (53),
- qui agit en coopération avec deux corps de butée complémentaires (54b, 54c), où
- le corps de butée (54a) entre en appui avec l'un des deux corps de butée complémentaires (54b, 54c), selon le sens de rotation de l'arbre d'engrenage (51), et
-- pour un appui du corps de butée (54a) sur le premier corps de butée complémentaire (54b), présente un premier espace (E₁ + E₂) entre le premier arbre d'excentrique (56) et l'axe longitudinal (52) de l'arbre d'engrenage (51), et
-- pour un appui du corps de butée (54a) sur le second corps de butée complémentaire (54c), présente un second espace (E₁ - E₂) , différent du premier espace (E₁ + E₂), entre le premier arbre d'excentrique (56) et l'axe longitudinal (52) de l'arbre d'engrenage (51).

7. Installation de traitement de pâte selon la revendication 6 **caractérisée en ce que**, pour un appui du corps de butée (54a) sur le premier corps de butée complémentaire (54b), un espace maximal (E₁ + E₂) se présente entre le premier arbre d'excentrique (56) et l'axe longitudinal (52) de l'arbre d'engrenage (51), et que, pour un appui du corps de butée (54a) sur le second corps de butée complémentaire (54c), un second espace minimal (E₁ - E₂) se présente entre le premier arbre d'excentrique (56) et l'axe longitudinal (52) de l'arbre d'engrenage (51).
